# FASCICULE DE BREVET EUROPEEN

(11) **EP 2 056 949 B1**
(45) Date de publication et mention de la délivrance du brevet: **14.08.2019**
(21) Numéro de dépôt: 07803065.7
(22) Date de dépôt: 30.08.2007
(51) Int. Cl.: B01D 21/01, B01J 19/00, G21F 9/10

(54) **PROCEDE ET DISPOSITIF DE PRECIPITATION D'UN SOLUTE**
VERFAHREN UND VORRICHTUNG ZUR AUSFÄLLUNG EINES GELÖSTEN STOFFS
METHOD AND DEVICE FOR PRECIPITATING A SOLUTE

(30) Priorité: 31.08.2006 FR 0653535
(43) Date de publication de la demande: 13.05.2009
(73) Titulaire: Commissariat à l'Énergie Atomique et aux Énergies Alternatives, 75015 Paris (FR)
(72) Inventeur: BORDA, Gilles, 30200 Bagnols Sur Ceze (FR); DUHAMET, Jean, 30200 Bagnols Sur Ceze (FR); GANDI, Florent, 30330 Saint Andre D'Olerargues (FR); LANOË, Jean-Yves, 30290 Laudun (FR)
(74) Mandataire: Ilgart, Jean-Christophe
(86) Numéro de dépôt international: PCT/EP2007/059056
(87) Numéro de publication internationale: WO 2008/025823

(56) Documents cités:
- EP-A- 0 251 399
- EP-A- 0 543 552
- EP-A1- 0 072 737
- EP-A1- 0 434 557
- US-A- 3 147 292

## Description

L'invention a trait à un procédé de précipitation d'un ou plusieurs solutés.

Elle peut trouver emploi, entre autres, pour récupérer de l'uranium ou du plutonium d'abord présents sous forme de nitrate d'uranium ou de plutonium dans une phase aqueuse, en mélangeant cette première phase liquide à une deuxième phase liquide d'acide oxalique également en solution aqueuse, ce qui donne un précipité d'oxalate d'uranium ou de plutonium qui est ensuite récupéré. Elle peut trouver emploi dans des applications analogues, comme la précipitation d'oxalate de néodyme, ou dans des applications différentes où les mêmes problèmes apparaissent.

Une difficulté de ces procédés provient du caractère collant du précipité, dont une partie excessive reste adhérente aux parois du récipient dans lequel le mélange est réalisé. Une autre difficulté de ces procédés est qu'il est difficile d'ajuster la taille des grains de précipité qu'on obtient.

L'état de l'art en la matière est abondant. Les précipitateurs utilisés sont de trois types principaux. Le premier comprend un récipient en verre dont le contenu est agité par la rotation d'un barreau inférieur, qui crée un vortex à la double fonction de maintenir le précipité éloigné des parois en verre, et donc d'éviter les collages sur elles, et de garantir un temps de séjour suffisant pour autoriser la croissance des grains du précipité afin de le rendre moins collant. L'évacuation du précipité se fait en continu par débordement du récipient.

Un autre genre de précipitateur comprend un bol tournant dans lequel le confinement du précipité est réalisé aussi par formation d'un vortex. L'évacuation du précipité se fait par remontée dans des canaux par force centrifuge.

Un autre genre de précipitateur est une colonne. L'agitation est réalisée par des ultrasons qui assurent aussi le mélange des deux phases. L'évacuation du précipité se fait au fond de l'appareil par un élévateur à bulles.

Le procédé est accompli dans ces différents précipitateurs en mélangeant directement la phase aqueuse contenant le soluté à précipiter et la phase aqueuse contenant le réactif de la précipitation. Dans un autre groupe de procédés, utilisable avec les mêmes précipitateurs, le soluté est présent dans un solvant et la phase aqueuse contenant le réactif assure aussi la désextraction du solvant ; les mêmes difficultés liées au collage du précipité sur les parois du précipitateur restent présentes. Le temps du séjour du précipité dans l'appareil, qu'on serait tenté de prolonger pour obtenir des grains plus gros, est malheureusement difficile à maîtriser. Plusieurs de ces procédés sont incompatibles avec une évacuation du précipité en continu, le précipité étant évacué après qu'un volume suffisant a été obtenu au fond du précipitateur. Enfin, tous ne permettent pas de traiter des débits importants de réactifs.

Un procédé complet pour réaliser la précipitation et la récupération de l'oxalate de plutonium est décrit dans le brevet français 1 378 933. On citera aussi le brevet européen 0 251 399 pour illustrer un procédé du même genre, où, en outre, un lavage de la phase organique chargée de plutonium est réalisé à l'aide d'une solution aqueuse afin de séparer le plutonium de l'américium avant la précipitation. Ainsi qu'on le verra, la présente invention comprend l'utilisation d'une phase organique supplémentaire, mais qui est employée dans des circonstances différentes, en présence des deux phases aqueuses comprenant le plutonium et le réactif, à des fins de confinement du précipité dans des conditions particulières d'écoulement dans le précipitateur.

Le brevet américain 3 147 292 illustre l'utilisation d'une solution aqueuse pour réaliser un lavage du précipité dans une colonne en aval du précipitateur, par une circulation, à contre-courant de la solution aqueuse, de la phase liquide contenant le précipité.

Le brevet français 0 434 557 illustre un dispositif où des cannes de bullage de gaz mesurent le niveau du précipité flottant à l'interface entre les phases lourdes et légères décantées.

Le brevet britannique 960 652 illustre l'utilisation d'un rotor d'agitation dans un précipitateur.

Le brevet EP-0 543 552-A décrit un précipitateur dont une paroi est couverte d'un revêtement hydrophobe.

Et le brevet EP-0 072 737-A1 décrit une précipitateur où les phases à mélanger sont introduites en haut d'un récipient, descendent au centre dans une chemise fixe, et le précipité est récupéré par un bol tournant autour de la chemise, alors qu'une partie du mélange tourne en boucle verticale dans la chemise et permet au précipité que cette partie transporte de mûrir avant d'être récupéré.

Un premier aspect de l'invention est un procédé de précipitation de soluté, comprenant un mélange dans un récipient d'une première phase liquide contenant le soluté et d'une deuxième phase liquide contenant un réactif faisant précipiter le soluté, une agitation du mélange et un enlèvement du précipité, caractérisé en ce qu'il comprend un confinement du mélange en émulsion dans une troisième phase liquide, chimiquement inerte et immiscible avec la première phase liquide et la deuxième phase liquide.

Ce procédé peut être appliqué dans un dispositif de précipitation d'un soluté, comprenant un récipient, des orifices d'introduction d'une première phase liquide contenant le soluté et d'une deuxième phase liquide contenant le réactif faisant précipiter le soluté, un orifice de sortie de la première phase liquide et de la deuxième phase liquide, un moyen d'agitation d'un volume interne au récipient, comprenant un orifice d'introduction d'une troisième phase liquide, comprenant des revêtements hydrophobes sur des surfaces délimitant le volume interne au récipient.

Les buts principaux de l'invention sont donc :
- d'éviter l'accumulation du précipité dans le précipitateur, notamment par collage contre ses parois ;
- d'obtenir une granulométrie favorable du précipité ;
- de maîtriser les caractéristiques de l'écoulement dans le précipitateur et de débit à travers le précipitateur ;
- d'enlever continuellement le précipité, et plus généralement d'avoir un fonctionnement régulier de l'appareil.

Cela doit être obtenu avec une structure simple du précipitateur.

Le premier but sera atteint par les revêtements hydrophobes des parois du précipitateur et certaines qualités de l'écoulement.

Le second but, par certaines qualités de l'écoulement et par une formation progressive du précipité.

Le troisième but, par un choix convenable des dimensions et des formes du récipient du précipitateur et notamment par le choix d'un récipient allongé où une circulation du liquide peut être instaurée ; et par l'utilisation d'une phase supplémentaire, dite phase organique dans les exemples donnés ci-dessous et circulant à contre-courant des phases aqueuses.

Le quatrième but, par l'utilisation d'un circuit de balayage du fond du récipient, là où s'accumule le précipité.

L'invention sera maintenant décrite en liaison aux figures, dont :
- les figures 1 et 2 illustrent deux réalisations de récipients de précipitation,
- et la figure 3 est un agrandissement de la figure 1.

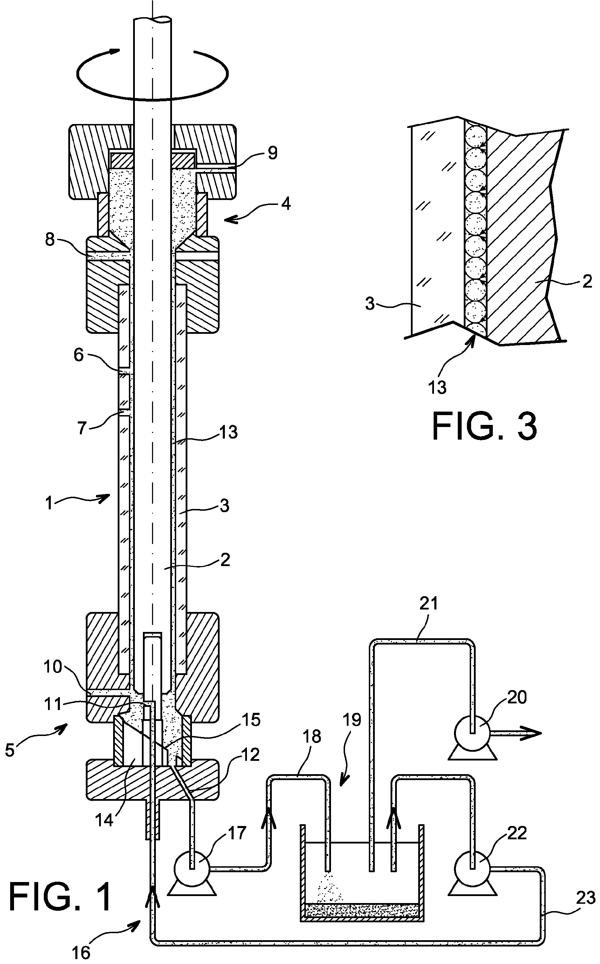

La figure 1 représente une réalisation de l'invention. Le précipitateur 1 est un récipient en forme de colonne au centre duquel tourne un rotor 2. Le précipitateur est délimité par un tube 3 de verre orienté verticalement au centre, et, à ses deux extrémités, par un embout supérieur 4 et un embout inférieur 5 dans lesquels tourne le rotor 2. Le tube 3 comprend une première entrée 6 de phase aqueuse et une seconde entrée 7 de phase aqueuse, toutes deux contenant le soluté à précipiter (comme une solution de nitrate de plutonium), établies à des hauteurs différentes dans le tube 3 non loin de l'embout supérieur 4. L'embout supérieur 4 comprend une entrée 8 de phase aqueuse contenant un réactif créant la précipitation (comme de l'acide oxalique en solution) et, au-dessus, une surverse 9 de phase organique. L'embout inférieur 5 comprend une entrée 10 de phase organique (qui peut être du tétrapropylène hydrogéné), et, au-dessous, une entrée 11 et une sortie 12 de phase aqueuse de balayage. Les entrées et les sorties 6, 7, 8, 10 sont en communication avec un espace annulaire 13 entre le tube 3 et le rotor 2, dans lequel la précipitation a lieu à mesure que la phase aqueuse du réactif se mélange à la phase aqueuse du soluté, les phases aqueuses descendant le long du tube 3. La phase organique est à contre-courant des phases aqueuses et s'élève de l'entrée 10 à la surverse 9. Le débit de la phase organique par rapport aux phases aqueuses, la largeur de l'espace annulaire 13 et la vitesse de rotation du rotor 2 sont réglées de façon à établir un écoulement de Couette dans lequel des rouleaux de Taylor contrarotatifs à mouvement axial et radial (illustrés à la figure 3) sont alignés dans l'espace annulaire 13 et confinent les phases aqueuses dans des gouttelettes d'émulsion incluses dans la phase organique. Ces gouttelettes tendent à rester dans un rouleau déterminé, avec un écoulement tourbillonnaire qui les fait descendre peu à peu dans l'espace annulaire 13 tout en s'éloignant et s'approchant sans cesse du rotor 2 et du tube 3. Le précipité se forme et demeure dans ces gouttelettes sans possibilité importante de venir au contact des parois du rotor 2 et du tube 3 qui délimitent l'espace annulaire 13 ni de coller sur elles. La croissance des grains du précipité s'effectue dans ces gouttelettes, dont la coalescence est évitée par la stabilité de l'écoulement et l'absence de migration des solutés dans la phase organique. Le mélange des phases aqueuses et la formation du précipité sont progressifs grâce aussi à la stabilité de l'écoulement, qui aide à maintenir les gouttelettes séparées. Enfin, la turbulence entretient l'émulsion. La première entrée de phase aqueuse 6 reçoit une phase aqueuse dont la teneur en soluté est plus faible que la deuxième entrée 7, afin de réaliser un ensemencement du flux aqueux en précipité et à favoriser la précipitation par croissance des grains obtenus par l'ensemencement quand la phase aqueuse plus concentrée arrive par la deuxième entrée 7. On obtient finalement des grains moins nombreux, plus homogènes et plus gros.

Le fond de l'appareil est occupé par une pièce massive 14 à la surface supérieure inclinée 15 au bas de laquelle s'ouvre l'orifice de sortie 12 de la phase aqueuse de balayage. La phase aqueuse descend dans le précipitateur jusqu'à la surface supérieure inclinée 15. Le précipité glisse jusqu'à l'orifice de sortie 12 qui débouche dans un circuit de récupération 16. Une première pompe 17 prélève la phase aqueuse et la fait circuler dans une conduite 18 jusqu'à un bac de décantation 19 au fond duquel le précipité s'accumule. Une deuxième pompe 20 aspire les eaux mères oxaliques surnageantes dans une conduite de sortie 21. Une troisième pompe 22 aspire le reste de la phase aqueuse dans une conduite de recyclage 23 qui aboutit via la conduite 16 à l'orifice d'entrée 11 de la phase aqueuse de balayage.

La surface du rotor 2 et la surface interne de l'enveloppe 3 sont revêtues d'une matière hydrophobe afin de contrarier le contact des phases aqueuses contenant le précipité et ainsi son collage. Des revêtements convenables sont le polytétrafluoréthylène (dont un nom commercial est le Téflon®) pour les surfaces métalliques ou un revêtement issu d'un traitement de silanisation pour les parois en verre. Ce traitement consiste, après un décapage du verre et une activation par une solution sodique (NaOH de 3 à 10 M), à venir greffer une couche de molécules hydrophobes de groupements alkyls par contact avec un silane hydrophobe. Le silane hydrophobe utilisé ici est l'ODTMOS (octadécyltriméthoxysilane).

Le pré-ensemencement du flux aqueux par les orifices d'entrée 6 et 7 de phase aqueuse étagés réduit aussi les risques de collage du précipité grâce à la formation de grains fins à l'étape de pré-ensemencement, autour desquels la suite du précipité se forme plus facilement.

Enfin, l'utilisation d'une phase organique immiscible avec laquelle la phase aqueuse forme une émulsion sans se mélanger à elle favorise le confinement du précipité dans des gouttelettes de phase aqueuse. On s'efforce d'obtenir un écoulement structuré en rouleaux de Taylor pour les raisons indiquées plus haut.

L'utilisation d'un débit ascendant de phase organique que l'on peut éventuellement recycler par l'entrée 10 permet encore de ralentir la descente de la phase aqueuse, et de favoriser l'agglomération du précipité en grains plus gros et plus homogènes.

Une variante du procédé pourrait être obtenue en introduisant le soluté qui doit précipiter dans le solvant plutôt que dans une phase aqueuse et à accomplir une désextraction précipitante. Le solvant pourrait être du tributyle-phosphate à 30% en volume dans du tétrapropylène hydrogéné chargé en plutonium, en se plaçant dans les conditions du document EP 0 251 399. Le reste du procédé est inchangé.

Enfin, le recyclage de la phase aqueuse dans un circuit composé des conduites 18 et 23, à plus fort débit que le débit aqueux alimentant le précipitateur, assure un balayage de la partie basse du précipitateur qui favorise la sortie à temps du précipité et le recyclage de la phase aqueuse.

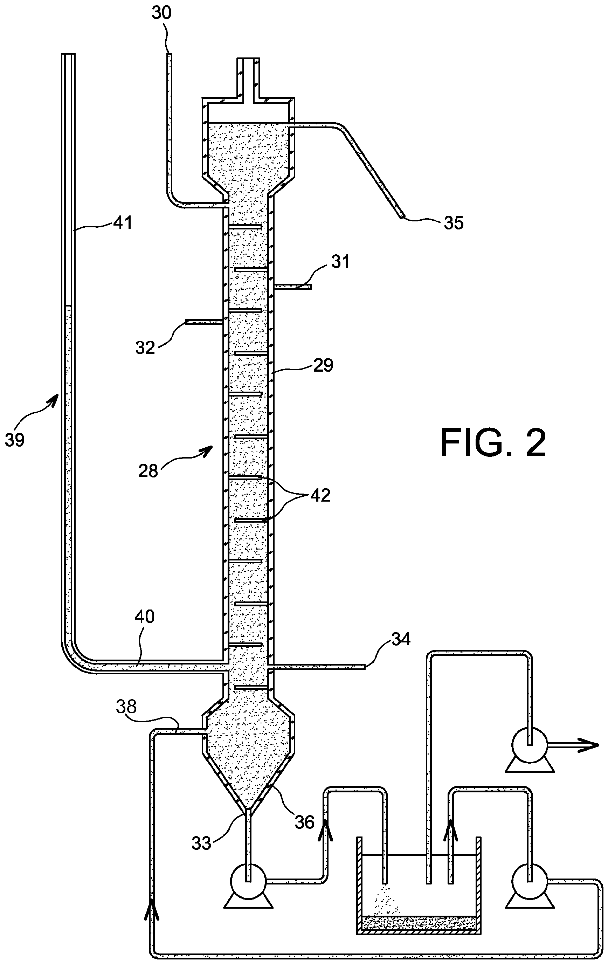

Une variante de précipitateur sera décrite à l'aide de la figure 2.

Le précipitateur 28 est dépourvu de rotor et comprend ici une simple enveloppe 29. On retrouve un orifice d'entrée 30 d'une solution aqueuse comprenant le réactif, un premier orifice d'entrée 31 d'une phase aqueuse contenant le soluté à précipité, un second orifice d'entrée 32 d'une phase aqueuse contenant le soluté, un orifice de sortie 33 de la phase aqueuse, un orifice d'entrée 34 de la phase organique et un orifice de sortie 35 de la phase organique. Les orifices 35, 30, 31, 32, 34 et 33 se succèdent dans cet ordre depuis le haut jusqu'au bas de l'enveloppe 29. L'enveloppe 29 est en forme de colonne verticale, cylindrique dans sa partie médiane, renflée au haut au-dessus de l'orifice 30 d'entrée de la phase aqueuse contenant le réactif pour laisser se décanter le précipité dans la phase organique et renflée au bas pour laisser se décanter la phase aqueuse contenant le précipité, au-dessous de l'orifice d'entrée 34 de la phase organique. L'extrémité inférieure de ce décanteur est toutefois en forme d'entonnoir 36 où s'accumule le précipité. L'orifice de sortie 33 de la phase aqueuse débouche dans un circuit de recyclage semblable à celui de la réalisation précédente et qui finit sur un orifice de retour 38.

L'élément essentiel de cette réalisation est la façon dont l'agitation est créée par une jambe de pulsation 39 comprenant une portion inférieure horizontale 40 débouchant en face de l'orifice d'entrée 34 de la phase organique et une portion supérieure 41 formant un coude avec la précédente et s'élevant parallèlement à l'enveloppe 29 pour déboucher par un orifice supérieur sur un dispositif de pulsation du type de ceux communément utilisés pour pulser les colonnes d'extraction liquide-liquide à l'aide d'un gaz comprimé. De plus, des plateaux horizontaux 42 s'étendent dans l'enveloppe 29 en obligeant les fluides à accomplir des trajets en zigzag. Les plateaux 42 et l'enveloppe 29 sont aussi recouverts d'un revêtement hydrophobe dans cette réalisation. L'agitation créant l'émulsion est ici suscitée par les pulsations du liquide dans la jambe 39.

Le procédé de formation de l'émulsion, de formation du précipité avec une croissance progressive du grain, et de confinement de la phase aqueuse en gouttelettes dans la phase organique est identique à celui de la réalisation précédente. Il en est de même pour l'évacuation progressive du précipité par le circuit de balayage à grand débit.

La circulation à contre-courant est créée ici aussi par le choix d'une phase organique moins dense que les phases aqueuses, la jambe de pulsation 39 aidant à la formation d'une émulsion avec mise en contact progressive des deux phases aqueuses.

La vitesse de l'écoulement, qui influe sur la taille des grains du précipité, dépend du débit de la phase organique ascendante, que l'utilisateur choisit librement.

Dans une variante du procédé, la première phase liquide est introduite en plusieurs débits distincts dans le récipient, les débits distincts ayant des teneurs différentes du soluté, et étant introduits en différents lieux du récipient, les débits distincts ayant une plus faible teneur en soluté étant introduits plus en avant dans le premier sens.

Dans une variante du dispositif, les orifices d'entrée de la première phase liquide et de la deuxième phase liquide sont situés d'un premier côté du récipient et l'orifice de sortie de la première phase liquide et de la deuxième phase liquide et l'orifice d'entrée de la troisième phase liquide sont situés d'un second côté du récipient opposé au premier côté.

Dans une autre variante, le dispositif d'agitation et le dispositif de circulation de la troisième phase liquide peuvent être ajustés pour obtenir la granulométrie visée pour le précipité.

## Revendications

1. Procédé de précipitation d'au moins un soluté, comprenant un mélange d'une première phase liquide contenant le soluté et d'une deuxième phase liquide contenant un réactif faisant précipiter le soluté dans un récipient (1 ; 3), une agitation du mélange et un enlèvement du précipité, **caractérisé en ce qu'**il comprend un confinement du mélange en émulsion dans une troisième phase liquide, chimiquement inerte et immiscible avec la première phase liquide et la deuxième phase liquide.

2. Procédé de précipitation d'au moins un soluté selon la revendication 1, **caractérisé en ce que** les phases circulent dans le récipient (1 ; 3), la première phase liquide et la deuxième phase liquide dans un premier sens et la troisième phase liquide dans un second sens opposé au premier sens.

3. Procédé de précipitation d'au moins un soluté selon l'une quelconque des revendications 1 ou 2, **caractérisé en ce que** le précipité est enlevé continuellement du récipient par une circulation en boucle du mélange de la première et de la deuxième phases liquides recyclées dans un circuit (16) passant par le récipient (1 ; 3).

4. Procédé de précipitation d'au moins un soluté selon la revendication 2, **caractérisé en ce que** la première phase liquide est introduite en plusieurs débits distincts dans le récipient, les débits distincts ayant des teneurs différentes du soluté, et étant introduits en différents lieux (6, 7) du récipient, les débits distincts ayant une plus faible teneur en soluté étant introduits plus en avant dans le premier sens.

5. Procédé de précipitation d'au moins un soluté selon la revendication 2, **caractérisé par** des revêtements hydrophobes sur des surfaces délimitant le volume interne au récipient (3).

6. Procédé de précipitation d'au moins un soluté selon la revendication 5, **caractérisé en ce que** l'agitation du mélange est faite par un rotor (2) tournant dans le récipient et délimitant un espace annulaire (13) avec le récipient, qui est cylindrique.

7. Procédé de précipitation d'au moins un soluté selon l'une quelconque des revendications 1 à 6, caractérisé en ce l'agitation et la circulation de la troisième phase liquide peuvent être ajustées pour obtenir la granulométrie visée pour le précipité.

## Patentansprüche

1. Verfahren zum Ausfällen wenigstens eines gelösten Stoffes, welches eine Mischung einer ersten flüssigen Phase, welche den gelösten Stoff enthält, und einer zweiten flüssigen Phase, welche ein Reaktionsmittel enthält, das zur Ausfällung des gelösten Stoffes in einem Behälter (1; 3) führt, umfasst; ein Rühren der Mischung und ein Entfernen des gelösten Stoffes, **dadurch gekennzeichnet, dass** es ein Einschließen des Gemischs in Emulsion in einer dritten flüssigen Phase umfasst, welche chemisch inert und nicht mischbar mit der ersten flüssigen Phase und der zweiten flüssigen Phase ist.

2. Verfahren zum Ausfällen wenigstens eines gelösten Stoffes nach Anspruch 1, **dadurch gekennzeichnet, dass** die Phasen in dem Behälter (1; 3) zirkulieren - die erste flüssige Phase und die zweite flüssige Phase in einer ersten Richtung und die dritte flüssige Phase in einer zur ersten Richtung entgegen gesetzten zweiten Richtung.

3. Verfahren zum Ausfällen wenigstens eines gelösten Stoffes nach einem der Ansprüche 1 oder 2, **dadurch gekennzeichnet, dass** das Präzipitat durch eine Kreislaufzirkulation der Mischung der in einem durch den Behälter (1; 3) verlaufenden Kreislauf (16) wiedergewonnenen ersten und zweiten Phase kontinuierlich aus dem Behälter entfernt wird.

4. Verfahren zum Ausfällen wenigstens eines gelösten Stoffes nach Anspruch 2, **dadurch gekennzeichnet, dass** die erste flüssige Phase in mehreren unterschiedlichen Volumenmengen in den Behälter eingeführt wird, wobei die unterschiedlichen Volumenmengen unterschiedliche Gehalte des gelösten Stoffes aufweisen und an unterschiedlichen Stellen (6, 7) des Behälters eingeführt werden, wobei die unterschiedlichen Volumenmengen mit einem geringeren Gehalt an gelöstem Stoff in der ersten Richtung weiter vorne eingeführt werden.

5. Verfahren zum Ausfällen wenigstens eines gelösten Stoffes nach Anspruch 2, **gekennzeichnet durch** hydrophobe Beschichtungen auf Flächen, die das Innenvolumen (3) des Behälters begrenzen.

6. Verfahren zum Ausfällen wenigstens eines gelösten Stoffes nach Anspruch 5, **dadurch gekennzeichnet, dass** das Rühren der Mischung durch einen Rotor (2) erfolgt, der sich in dem Behälter dreht und mit dem Behälter einen ringförmigen Raum (13) begrenzt, der zylindrisch ist.

7. Verfahren zum Ausfällen wenigstens eines gelösten Stoffes nach einem der Ansprüche 1 bis 6, **dadurch gekennzeichnet, dass** das Rühren und die Zirkulation der dritten flüssigen Phase angepasst werden können, um die angestrebte Viskosität des Präzipitats zu erhalten.

## Claims

1. Precipitation method of at least one solute, comprising mixing of a liquid phase containing the solute and a second liquid phase containing a reagent causing the solute to precipitate in a vessel (1;3), stirring of the mixture and removal of the precipitate, **characterised in that** it comprises confinement of the mixture in emulsion in a third, chemically inert, liquid phase, non-miscible with the first liquid phase and the second liquid phase.

2. Precipitation method of at least one solute according to claim 1, **characterised in that** the phases circulate in the vessel (1;3), the first liquid phase and the second liquid phase in a first direction and the third liquid phase in a second direction opposite the first direction.

3. Precipitation method of at least one solute according to claim 1 or 2, **characterised in that** the precipitate is removed continually from the vessel by means of circulation in a loop of the mixture of the first and the second liquid phases, recycled in a circuit passing via the vessel (1;3).

4. Precipitation method of at least one solute according to claim 2, **characterised in that** the first liquid phase is introduced as several separate flow rates in the vessel, the separate flow rates having different solute contents, and being introduced at different points (6, 7) of the solute, the separate flow rates having a lower solute content being introduced forwardly in the first direction.

5. Precipitation method of at least one solute according to claim 2, **characterised by** hydrophobic coatings on surfaces defining the inner volume of the vessel (3).

6. Precipitation method of at least one solute according to claim 5, **characterised in that** the mixture is stirred by a rotor (2) turning in the vessel and defining an annular space (13) with the vessel, which is cylindrical.

7. Precipitation method of at least one solute according to anyone of claims 1 to 6, **characterised in that** the stirring and the circulating of the third liquid phase are adjustable for obtaining a desired grain size for the precipitate.
